(19) Europäisches Patentamt
European Patent Office
Office européen des brevets

(11) EP 2 390 532 A1

(12) EUROPEAN PATENT APPLICATION
published in accordance with Art. 153(4) EPC

(43) Date of publication:
30.11.2011 Bulletin 2011/48

(51) Int Cl.:
F16H 25/22 (2006.01)          B66F 9/08 (2006.01)

(21) Application number: 09838883.8

(22) Date of filing: 25.12.2009

(86) International application number:
PCT/JP2009/071682

(87) International publication number:
WO 2010/084693 (29.07.2010 Gazette 2010/30)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 23.01.2009 JP 2009013006

(71) Applicant: Hitachi Construction Machinery Co.,
Ltd
Tokyo 112-8563 (JP)

(72) Inventors:
• HAYASE, Isao
Hitachinaka-shi
Ibaraki 312-0034 (JP)
• HIRAKU, Kenji
Hitachinaka-shi
Ibaraki 312-0034 (JP)
• YAMADA, Hiroyuki
Hitachinaka-shi
Ibaraki 312-0034 (JP)
• OCHIAI, Masami
Tokyo 112-8563 (JP)
• YANAGI, Yuichi
Tokyo 105-0003 (JP)
• SEKIYAMA, Nobuya
Yokohama-shi
Kanagawa 244-0817 (JP)

(74) Representative: Beetz & Partner
Patentanwälte
Steinsdorfstraße 10
D-80538 München (DE)

(54) **LINEAR ACTUATOR AND FORKLIFT**

(57) This invention includes a screw shaft 1, a screw thread 10 formed spirally on an outer periphery of the screw shaft, a plurality of rollers 2 arranged along the thread so as to be spaced from one another in a circumferential direction of the screw shaft to roll along a flank surface 1a of the screw thread via a rolling surface 2c, and a roller cage 3 accommodating the plurality of rollers so as to rotate each of the rollers on respective axes and constructed so that when the rollers are made to roll, the cage moves about the screw shaft in relative form with respect thereto; wherein the rollers each have a central axis 26 fixedly positioned with respect to the roller cage so that the roller takes a posture making a line imaginarily extended from the central axis intersect the screw shaft, and so that the central axis is inclined towards the flank surface with which the rolling surface comes into contact. Thus, a linear actuator is provided that has high motive power transmission efficiency and excellent durability since significant slipping between the rollers and the screw shaft is suppressed.

FIG. 1

EP 2 390 532 A1

**Description**

Technical Field

The present invention relates to a linear actuator that generates relative rectilinear motion between a screw shaft and a roller cage, and to a forklift truck equipped with the actuator.

Background Art

In recent years, a trend towards using electrically driven actuators as the actuators for various machines and devices, in place of conventional hydraulic actuators, is increasing as integral part of the countermeasures against environmental pollution and global warming. This tendency aims at achieving several advantageous effects obtainable from using electrically driven actuators. For example, not using the hydraulic oil required for the operation of hydraulic machines or devices serves as an environmental preventive in itself, and at the same time, the improvement of efficiency by electrical driving is useful for reducing motive power consumption. In addition, it is possible to further reduce motive power consumption by utilizing power regeneration, to reduce the local environmental load at the operating site of the actuator by converting its source of energy from the fuel in an internal-combustion engine into electric power, and to use energy more effectively in a wider area by using midnight electric power via batteries. Such a trend is already extending to the application field of the linear actuators which generate large thrust, as with the hydraulic cylinders most commonly used on construction machines. Needs for electrically driven linear actuators durable for large-thrust generation are also increasing.

Among the rotary-to-linear conversion mechanisms used in electrically driven linear actuators are ball screws that use a small ball as the rolling body disposed in a clearance between a screw shaft and a nut member. This conventional technique causes point contact between the screw shaft, the nut member, and the small ball, thus resulting in flaking due to a significant Hertzian stress, and tending not to guarantee enough durability for use in large-thrust long-life applications.

The techniques intended to solve problems of this kind include adopting a tapered roller as a rolling body, instead of the small ball in the ball screw. JP-2004-190767-A, for example, describes such a technique. This conventional technique using a tapered roller aims at reducing the above-mentioned Hertzian stress for improved durability against flaking, by generating point contact or a contact state close thereto between the roller, the screw shaft, and the nut member.

Prior Art Literature

Patent Documents

**[0005]**

　　　Patent Document 1: JP-2004-190767-A

Summary of the Invention

Problems to be Solved by the Invention

In the above technique, however, a relative movement of the nut member with respect to the screw shaft also causes a relative movement of the tapered roller itself with respect to the nut member. To prevent the tapered roller from being moved out from the nut member, therefore, it is necessary to provide a route that circulates the tapered roller, as is the case with the ball screw. Despite the formation of this route, the tapered roller, unlike the ball, has a shape with directionality, so it is actually very difficult to maintain a point-contact posture on the circulating route or to circulate the roller smoothly thereon. In addition, since the tapered roller accommodated in the nut member tends to become relatively small in average diameter, a greater number of rollers need to be used to transmit thrust. Furthermore, making each of these rollers equally share the load requires fabricating each tapered roller, the screw shaft, and the nut member very accurately, in terms of which the conventional technique lacks feasibility.

It is an object of the present invention to provide a linear actuator having high motive power transmission efficiency and excellent durability.

Means for Solving the Problems

In order to attain the above object, the present invention includes a screw shaft, a screw thread formed spirally on an outer periphery of the screw shaft, a plurality of rollers arranged along the thread so as to be spaced from one another in a circumferential direction of the screw shaft to roll along flank surface of the screw thread via respective rolling surfaces, and a roller cage accommodating the plurality of rollers so as to rotate each thereof on respective axes and constructed so that when the rollers are made to roll, the cage moves about the screw shaft in relative form with respect thereto; wherein the rollers each have a central axis fixedly positioned with respect to the roller cage so that the roller takes a posture making a line imaginarily extended from the central axis intersect the screw shaft, and so that the central axis is inclined towards the flank surfaces with which the rolling surfaces come into contact.

Effects of the Invention

Since the present invention suppresses significant slipping between the roller and the screw shaft, the invention provides a linear actuator having high motive power transmission efficiency and excellent durability.

Brief Description of the Drawings

Fig. 1 is a side sectional view of a linear actuator which is a first embodiment of the present invention;
Fig. 2 is a front view of the linear actuator in direction II in Fig. 1;
Fig. 3 is a side sectional view of a linear actuator which is a second embodiment of the present invention;
Fig. 4 is a side sectional view of a linear actuator which is a third embodiment of the present invention;
Fig. 5 is a diagram that shows rolling distances of various sections at point P1 in Fig. 4;
Fig. 6 is a diagram that shows rolling distances of various sections at point P3 in Fig. 4;
Fig. 7 is an explanatory diagram of a design theory for minimizing friction loss in the third embodiment;
Fig. 8 is a sectional view that shows vicinity of a rolling portion 2e of a roller 2 on plane C in Fig. 4;
Fig. 9 is a sectional view that shows vicinity of a tapered roller 14a of a bearing 14 on plane C in Fig. 4;
Fig. 10 is a side sectional view of a linear actuator which is a fourth embodiment of the present invention;
Fig. 11 is a side view of a forklift truck equipped with a linear actuator according to the present invention; and
Fig. 12 is an enlarged view that shows a mast and its vicinity, of the forklift truck shown in Fig. 11.

Modes for Carrying out the Invention

Hereunder, embodiments of the present invention will be described with reference to the accompanying drawings.

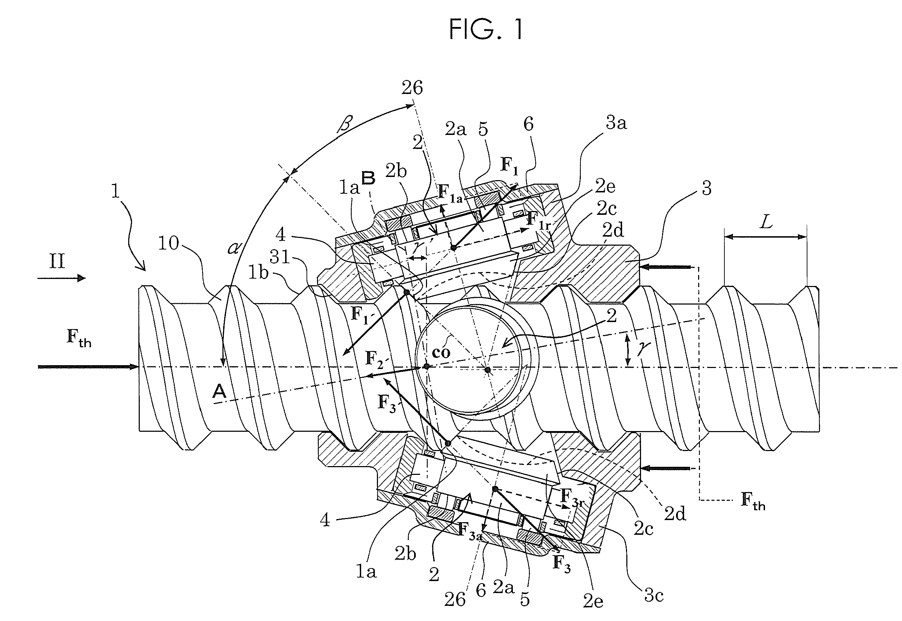

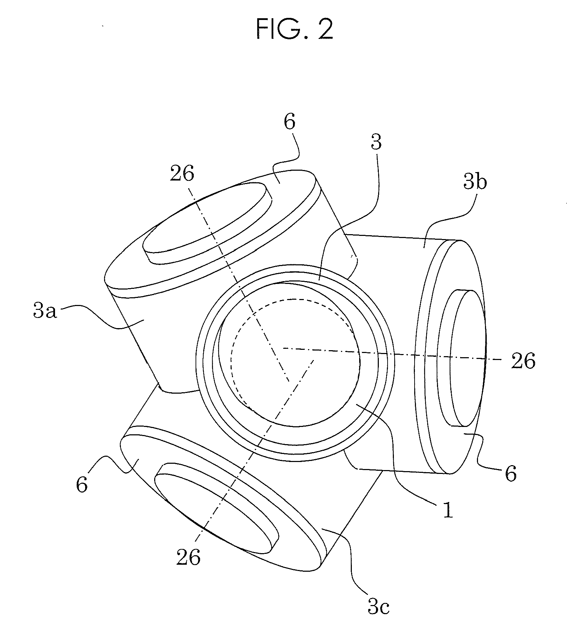

Fig. 1 is a side sectional view of a linear actuator which is a first embodiment of the present invention, and Fig. 2 is a front view of the linear actuator in direction II in Fig. 1.

The linear actuator shown in Figs. 1, 2 includes a screw shaft 1, a plurality of rollers 2, and a roller cage 3, as main constituent elements.

Spirally formed screw threads 10 are provided on an outer periphery of the screw shaft 1. Each thread 10 is inclined at its flank surfaces 1a and 1b with respect to a central axis of the screw shaft 1. The thread 10 in the present embodiment has a section of a trapezoidal shape, and a face of the thread 10 on a radially outer side of the screw shaft 1 is substantially parallel to the central axis thereof. The inclined flank surfaces 1a, 1b stretch out from each ends of the parallel face respectively, towards the screw shaft 1. The thread 10 formed into such a profile forms a thread groove on the outer periphery of the screw shaft 1, and the screw shaft 1 is male-threaded. Hereinafter, where appropriate, the flank surface located on the right side of the parallel face in Fig. 1 may be referred to as the right flank surface 1a, and the flank surface located on the left side of the parallel face, as the left flank surface 1b.

Female-threaded portion 31 that mate with the male thread of the screw shaft 1 are formed on the roller cage 3, and the screw shaft 1 is inserted within the roller cage 3 via the female-threaded portions 31. As shown in Fig. 2, the roller cage 3 also has a plurality of nearly cylindrical protrusions, 3a, 3b, 3c, each protruding towards the radial outside of the screw shaft 1 (more specifically, towards a central axis of each roller 2). The description below assumes that in Fig. 2, the protrusions 3a, 3b, 3c are positioned in that order when viewed from the front of the paper to the rear thereof. The protrusion 3b is disposed at a position shifted from that of the protrusion 3a through 1/3 of a lead L of the screw shaft 1 in a rightward direction of Fig. 1 (axial direction of the screw shaft 1) and rotated from the position of the protrusion 3a through 120 degrees ($2\pi/3$) about the central axis of the screw shaft 1. The protrusion 3c is disposed at a position shifted from that of the protrusion 3b through 1/3 of the lead L in the rightward direction of Fig. 1 and rotated from the position of the protrusion 3b through 120 degrees about the central axis of the screw shaft 1. Because of these relationships, the protrusions 3a, 3c in Fig. 1 should originally be shown at the positions shifted to the left and right, respectively, of Fig. 1 from the position of the protrusion 3b (shown centrally in Fig. 1) through 1/3 of the lead L and rotated from the position of the protrusion 3b through 120 degrees. However, for the sake of convenience in representing all of the three protrusions, 3a, 3b, 3c, on one plane, the protrusions 3a, 3c are shown at positions shifted to the left and the right, respectively, through 1/4 of the lead L. In addition, in order to provide similar convenience, sections of the protrusions 3a, 3c in Fig. 1 are shown as sections each having cylindrical roller bearings 4, 5 and covers 6, as well as the rollers 2, on a plane including the central axis 26 of each roller 2, and as sections each having the female-threaded portions 31 of the roller cage 3 on a plane including the central axis of the screw shaft 1.

Inside the protrusions 3a, 3b, 3c, the rollers 2 are rotatably accommodated via respective roller bearings (the cylindrical roller bearings 4, 5 described later), with openings of the protrusions 3a, 3b, 3c being blocked by the respective covers 6. The covers 6 are each fixed to the roller cage 3 by a fixture not shown, such as a bolt. The roller cage 3 and the screw shaft 1 are in contact with each other only via rolling surfaces 2c of the plurality of rollers 2 accommodated in the roller cage 3, and are not in contact at other sections. When the plurality of rollers 2 roll, the roller cage 3 turns about the screw shaft 1 in relative fashion with respect thereto, creating relative rectilinear motion between the screw shaft 1 and the roller cage 3. While in the roller cage 3 of the present embodiment, the three protrusions, 3a, 3b, 3c, for accommodating the three rollers, 2, are provided in terms of priority to ease of production, the number of protrusions, or that of rollers 2, may be changed as appropriate according to a magnitude of axial thrust to be exerted.

In Fig. 1 with each roller 2 (rolling surface 2c) in contact with the right flank surface 1a (as described above, neighborhood of the female-threaded portions 31 in Fig. 1 is conveniently shown as the section on the plane including the central axis of the screw shaft 1), the female-threaded portions 31 are formed so that a clearance formed between the right flank surface 1a and the female-threaded portions 31 is greater in relative fashion than a clearance formed between the left flank surface 1b and the female-threaded portions 31.

Because of the female-threaded portions 31 being thus formed, when axial thrust Fth is acting in the direction shown in Fig. 1 (the rightward direction in Fig. 1), the axial thrust Fth can be reliably transmitted to the roller cage 3 via the roller 2. Forming the female-threaded portions 31 to have the above-described shape, therefore, enables the relative rotation and axial movement between the screw shaft 1 and the roller cage 3 to be performed with a rolling pair of small friction loss. Provided that the female-threaded portions 31 are formed as described above, even if the axial thrust Fth acts in a direction opposite to that in Fig. 1 (i.e., a leftward direction in Fig. 1), the left flank surface 1b with the smaller clearance from the female-threaded portions 31 comes into immediate contact with the female-threaded portions 31, so a backlash due to the axial thrust Fth is held down to a small level.

Each roller 2 includes a rolling portion 2e that rotates about the central axis 26 and rolls along the right flank surface 1a, a rotating shaft 2a that protrudes from the rolling portion 2e and includes the central axis 26 centrally inside, an inner end face 2d as an end face formed on the rolling portion 2e and close to the screw shaft 1, and an outer end face 2b as an end face formed on the rotating shaft 2a and close to the corresponding cover 6. A rolling surface 2c that comes into contact with the right flank surface 1a is provided in a circumferential direction of the rolling portion 2e, and the rolling portion 2e rolls along the right flank surface 1a via the rolling surface 2c.

The central axis 26 of the roller 2 is fixedly positioned with respect to the roller cage 3 to maintain the roller 2 in a posture that a line imaginarily extended from the central axis 26 intersects the screw shaft 1. The central axis 26 of the roller 2 is positioned on plane A intersecting the central axis of the screw shaft 1 at an angle $\gamma$ nearly equal to a lead angle $\gamma'$ (see Fig. 1) of each screw thread 10. The phrasing of "the angle $\gamma$ at which plane A intersecting the central axis of the screw shaft 1 is nearly equal to the lead angle $\gamma'$" here is due to the following reason. The lead angle $\gamma'$ can be calculated from an intersecting line of the right flank surface 1a and a predetermined cylindrical surface constantly distanced from the central axis of the screw shaft 1. However, since the right flank surface 1a exists over a predetermined range (in a height range of the thread 10) from the central axis of the screw shaft 1 in the radial direction thereof, the lead angle $\gamma'$ also takes a value within a predetermined range, depending upon what section on the right flank surface 1a is selected. This makes it difficult to strictly associate the angle $\gamma$ and the lead angle $\gamma'$, for which reason the above phrasing has been used.

In addition, the lead angle $\gamma'$ is an angle formed by a tangent line denoted by single-dashed line B with respect to the right flank surface 1a in Fig. 1, and a line perpendicular to the central axis of the screw shaft 1, so single-dashed line B and plane A intersect nearly at right angles. That is, plane A is nearly perpendicular to the right flank surface 1a. The central axis 26 of the roller 2 inside the protrusion 3a, 3b, as with that of the roller 2 inside the protrusion 3b, lies in a plane intersecting the central axis of the screw shaft 1 at the angle of $\gamma$.

Forming the rolling surface 2c to ensure its contact with the right flank surface 1a while maintaining the central axis 26 in the above posture, therefore, enables the rolling surface 2c and the right flank surface 1a to be brought into contact with each other at sections close to respective central axes. Such forming also enables respective sections far from the central axes to be brought into contact with each other. Thus, slipping between the roller 2 and the thread 10 can be suppressed.

Furthermore, while maintaining the above posture, the central axis 26 of the roller 2 of the present embodiment is retained in a posture inclined towards the thread 10 with which the rolling surface 2c is in contact. That is, the central axis 26 is inclined towards the contact section between the rolling surface 2c and the right flank surface 1a, in plane A.

Inclining the central axis 26 towards the right flank surface 1a in this way enables the inner end face 2d of the roller 2 to be disposed externally to the thread 10 at a spacing of one pitch from the thread 10 with which the rolling surface 2c is in contact. Compared with not inclining the central axis 26, therefore, such inclining thereof enables the rolling portion 2e of the roller 2 to be increased in diameter (more specifically, diameter of the inner end face 2d). For example, this enables the diameter of the inner end face 2d to be made greater than a pitch of the thread 10 (in the present embodiment, also equivalent to the lead L), and hence the inner end face 2d to be opposed to a thread 10 next to the thread 10 with which the rolling surface 2c is in contact. Therefore, maintaining the posture in which the central axis 26 of the roller 2 is inclined towards the thread 10, as described above, enables a Hertzian stress upon the rolling surface 2c and right flank surface 1a to be reduced since the diameter of the rolling portion 2e can be increased.

To increase the diameter of the rolling portion 2e to such a level that the inner end face 2d faces the thread 10 as described above, the inner end face 2d is preferably formed with a gently curved recess, as in the present embodiment. This is because the recess of the inner end face 2d avoids contact of this end face with the thread 10. In addition, if the inner end face 2d is formed with such a recess, even when an angle at which the central axis 26 of the roller 2 is inclined towards the thread 10 is small, interference with the thread 10 at next pitch can be avoided. Inclining the central axis 26 at a small angle in this form enables an outside diameter of the roller cage 3 to be made small.

The rolling surface 2c of each roller 2 is formed to come into contact with the right flank surface 1a in a definite range in the direction of the central axis 26. Bringing in this form in which the rolling surface 2c and the right flank surface 1a come into contact with each other reduces the Hertzian stress, improving durability against flaking. In a case in which the right flank surface 1a of the thread 10 is inclined with respect to the central axis of the screw shaft 1, as in the present embodiment, the roller 2 is preferably formed so that in a definite range in the direction of its central axis 26, as the diametral section of the rolling portion 2e approaches the screw shaft 1, the diametral section is progressively reduced in size to suit a particular shape of the right flank surface 1a. If the roller 2 is thus formed, the roller 2 and the screw shaft 1 can be brought into contact with each other at sections far from the respective central axes and at sections close thereto, and slipping can therefore be suppressed to a very small level at any position in the region where both are in contact.

It is preferable that the contact section of the rolling portion 2e and the right flank surface 1a be kept as long as possible to achieve line contact between both. In this regard, the diameter of the rolling portion 2e in the present embodiment is reduced at a fixed rate in line with the shape of the thread 10 (i.e., the trapezoid) as the diametral section approaches the screw shaft 1 in a definite range in the direction of the central axis 26, and the rolling portion 2e is formed by part of a cone "co" (see Fig. 1). In other words, the rolling surface 2c is formed by part of a side surface of the cone "co", and the rolling portion 2e is in line contact with the right flank surface 1a, over an entire region of the latter.

Referring to Fig. 1, let an apex of the cone "co", defined by the rolling surface 2c, be $2\beta$, and let an angle that a contact line of the rolling surface 2c and the right flank surface 1a forms with respect to the central axis of the screw shaft 1 be $\alpha$ ($\alpha$ also represents the inclining direction of the right flank surface 1a at a section in a plane including the contact line; the angle formed by the central axis of the screw shaft 1 and the flank surface 1a shown as a profile of the thread 10 in Fig. 1 is strictly not equal to $\alpha$, but in approximate terms, the angle is equal to $\alpha$ if the value of the angle $\gamma$ is sufficiently small). Here, if a total angle of the angle $\alpha$ and the angle $\beta$ is reduced below $\pi/2$, as in a case of the roller 2 shown in Fig. 1, the central axis 26 of the roller 2 can be inclined towards the contact section of the rolling surface 2c and the right flank surface 1a. At this time, since the inner end face 2d of the roller 2 has an outer ring right-angled to the central axis 26, the outer ring inclines with respect to the central axis of the screw shaft 1. Inclining the central axis 26 in this form enables, as described above, the diameter of the rolling portion 2e to be increased for reduced Hertzian stress upon the rolling surface 2c and the right flank surface 1a.

Each roller 2 is supported by the roller cage 3 via both a radial rolling bearing 4 capable of supporting a radial load exerted upon the roller 2, and a thrust rolling bearing 5 capable of supporting a thrust load exerted upon the roller 2.

The radial rolling bearing 4 in the present embodiment is so-called a cylindrical roller bearing, which is formed by a plurality of cylindrical rollers circularly arranged to surround the rotating shaft 2a circumferentially around the bearing. The radial rolling bearing 4 is sandwiched between the rotating shaft 2a of the roller and inner walls of the protrusion 3a, 3b, 3c. The thrust rolling bearing 5 in the present embodiment is a cylindrical roller bearing, as with the bearing 4, and is formed by a plurality of cylindrical rollers circularly arranged at an outer edge of the outer end face 2b. The thrust rolling bearing 5 is sandwiched between the outer end face 2b and cover 6 of the roller 2. As a result, the radial load and thrust load acting upon the rolling bearings 4, 5 supporting the roller 2 are supported by the roller cage 3 in the end. The rotating shaft 2a and outer end face 2b of the roller 2 preferably have a heat-treated surface for enhanced surface hardness since the cylindrical rollers of the rolling bearings 4, 5 directly roll as described above.

By the way, let an imaginary line be defined in a case that as in the present embodiment, the flank surfaces 1a, 1b of the thread 10 are inclined with respect to the central axis of the screw shaft 1, the imaginary line intersecting the right flank surface 1a perpendicularly at where the rolling surface 2c and right flank surface 1a of the roller 2 come into contact. In this case, the radial rolling bearing 4 is preferably fixed to a position at which the imaginary line passes through a cylindrical space surrounded by the plurality of rollers forming the bearing 4. Such disposition of the radial rolling bearing 4 is described below.

Fig. 1 shows contact forces $F_1'$, $F_2'$, $F_3'$ exerted upon the right flank surface 1a of the roller 2 from the rolling surface 2c thereof by arrows extending perpendicularly from a central portion of the contact section between the two surfaces to the right flank surface 1a. The contact forces $F_1'$, $F_2'$, $F_3'$ are generated by axial thrusts Fth exerted upon a left end face of the screw shaft 1 and a right end face of the roller cage 3, in a relationship of action and reaction, in Fig. 1. As the rolling surface 2c and right flank surface 1a in the present embodiment are in line contact, although a resulting contact force is strictly a combination of linearly distributed loads, a resultant force of these loads conveniently represents the contact force. In the region from the right flank surface 1a to the rolling surface 1a, however, contact repulsions $F_1$, $F_2$ (not shown), and $F_3$ are acting in the relationship of action and reaction, with respect to the contact forces $F_1'$, $F_2'$, $F_3'$. The contact repulsions $F_1$ and $F_3$ shown in Fig. 1 are the same in magnitude as, and opposite in direction with respect to the contact forces $F_1'$ and $F_3'$, respectively. Therefore, $F_1$, $F_2$, $F_3$ are acting upon the above-mentioned imaginary line, or respective lines of action that pass through a central portion of the contact section between the rolling surface 2c and right flank surface 1a and are perpendicular to the contact section.

Here, if as described above, the radial rolling bearing 4 is disposed at the position where the imaginary line passes through the cylindrical space surrounded by the plurality of cylindrical rollers, since lines of action of the contact repulsions $F_1$, $F_2$, $F_3$ pass through the cylindrical space, the contact repulsions $F_1$, $F_2$, $F_3$ do not become overhang loads upon the radial rolling bearing 4. This makes it unnecessary to provide a separate bearing for supporting radial load components of an overhang load, and thus enables radial components, or radial loads $F_{1r}$, $F_{2r}$ (not shown), $F_{3r}$, of the contact repulsions $F_1$, $F_2$, $F_3$ upon the roller 2 to be supported with one radial rolling bearing 4 alone.

In addition, since at this time the axial (thrust direction) components of the contact repulsions $F_1$, $F_2$, $F_3$, or thrust loads $F_{1a}$, $F_{2a}$ (not shown), are supported by the thrust rolling bearing 5 sandwiched between the outer end face 2b and cover 6 of the roller 2, the contact repulsions $F_1$, $F_2$, $F_3$ acting upon the roller 2 can be supported with one radial rolling bearing 4 and one thrust rolling bearing 5. This holds down the number of bearings needed to support the roller 2, and hence reduces manufacturing costs of the linear actuator. Although details will be described later herein, if the rolling bearing 4 is formed to be able to support both of the radial load and the thrust load, the number of bearings required can be further reduced.

In the above case and further preferably, the radial rolling bearing 4 may be disposed such that as in the present embodiment, the imaginary line intersects the central axis 26 of the roller 2 centrally in a cross direction of the radial rolling bearing 4. Constructing the radial rolling bearing 4 in this form enables the contact repulsions $F_1$, $F_2$, $F_3$ to be decomposed into radial loads $F_{1r}$, $F_{2r}$, $F_{3r}$ and thrust loads $F_{1a}$, $F_{2a}$, $F_{3a}$, at the intersection between the imaginary line and the central axis 26. This enables the radial loads $F_{1r}$, $F_{2r}$, $F_{3r}$ to be acted upon the central section of the radial rolling bearing 4, in the cross direction of the roller 2, and the thrust loads $F_{1a}$, $F_{2a}$, $F_{3a}$ to be acted upon a central section of the thrust rolling bearing 5. Briefly, the contact repulsions $F_1$, $F_2$, $F_3$ acting upon the roller 2 can be supported reasonably with one bearing 4 for radial loads, and one bearing 5 for thrust loads. In addition, if the radial rolling bearing 4 is disposed as described above, since the thrust loads $F_{1a}$, $F_{2a}$, $F_{3a}$ can be acted upon the central section of the thrust rolling bearing 5, the above disposition yields a further advantage in that life of the thrust rolling bearing 5 improves over that in a case in which the linear actuator is designed so that the imaginary line merely passes through the radial rolling bearing 4.

Referring to the screw shaft 1, roller 2, and roller cage 3 having the construction described above, the screw shaft 1 and the roller cage 3 can be made to function together as the linear actuator, by using a sliding key or the like to form either the screw shaft 1 or the roller cage 3 as a member movable only in the axial direction without turning about its axis, and using a thrust bearing or the like to form the other as a member turnable about its axis while being constrained so as not to move axially. Briefly, rotationally driving one of the two turnable members (the screw shaft 1 and the roller cage 3) enables the other member to generate axial thrust. The above description means that if one member movable in the axial direction is driven axially, the other turnable member can also be rotationally driven.

Next, advantageous effects of the present invention are described below.

In the linear actuator having the above-described construction, the central axis 26 of each roller 2 is fixedly positioned with respect to the roller cage 3 so that the roller 2 takes the posture making the line imaginarily extended from the central axis 26 intersect the screw shaft 1, and so that the central axis 26 is inclined towards the flank surface 1a with which the rolling surface 2c comes into contact. Additionally, the rolling surface 2c of the roller 2 is in contact with the flank surface 1a in a definite range in the direction of the central axis 26 of the roller 2.

First, the fact that as described above, the roller 2 is fixed to keep the rolling surface 2c in contact with the flank surface 1a and to retain the roller 2 itself in the posture making the imaginarily extended line from the central axis 26 intersect the screw shaft 1, prevents the central axis 26 of the roller 2 and the central axis of the screw shaft 1 from being arranged in parallel to each other. Thus, the sections of the rolling surface 2c and right flank surface 1a, which are close to the respective central axes come into contact with each other at the contact section of the two surfaces, and sections far from the respective central axes come into contact with each other. Slipping is therefore suppressed at any position in the region where the roller 2 and the thread 10 come into contact.

In addition to the above, fixing the roller 2 so that it is retained in the posture inclining the central axis 26 towards the flank surface 1a enables the inner end face 2d of the roller 2 to be disposed externally to a thread 10 spaced by one pitch from the thread 10 with which the rolling surface 2c is in contact. Thus, inclining the central axis 26, compared with not inclining this central axis, enables the roller 2 to be increased in the diameter of the rolling portion 2e, and the resulting decrease in the Hertzian stress occurring on the rolling surface 2c and the right flank surface 1a contributes to improving the roller 2 in durability.

According to the present embodiment of the above-described construction, therefore, significant slipping between the roller 2 and the screw shaft 1 is suppressed and at the same time, the Hertzian stress occurring between both is reduced, so that motive power transmission efficiency and durability of the linear actuator improve.

Furthermore, since the diameter of the rolling portion 2e can be increased for the reason described above, the load that one roller 2 is able to support can be correspondingly increased, in terms of which the number of rollers 2 necessary to support constant axial thrust can be reduced in comparison with the number of rollers required in conventional technology. Moreover, since the decrease in Hertzian stress due to the above reason lowers the surface hardness required of the screw shaft 1 and that of the rolling surface 2c of the roller 2, omitting a heat treatment such as the quenching process required in the conventional technology becomes likely to reduce manufacturing costs.

If the number of rollers 2 which come into contact with the thread 10 is three as in the present embodiment, the linear actuator becomes easier to produce than in a case that four or more rollers 2 are provided, since all of these rollers 2 reliably come into contact with the thread 10 and support respective loads, even in presence of slight dimensional errors between components of the actuator. The ease in production makes vary of motive power transmission efficiency and durability, which are due to particular workmanship of the manufactured product, less liable to occur.

Next, a second embodiment of the present invention is described below. The present invention is equivalent to a linear actuator in which the rolling bearings 4, 5 in the first embodiment are replaced by other bearings (tapered roller bearings 14).

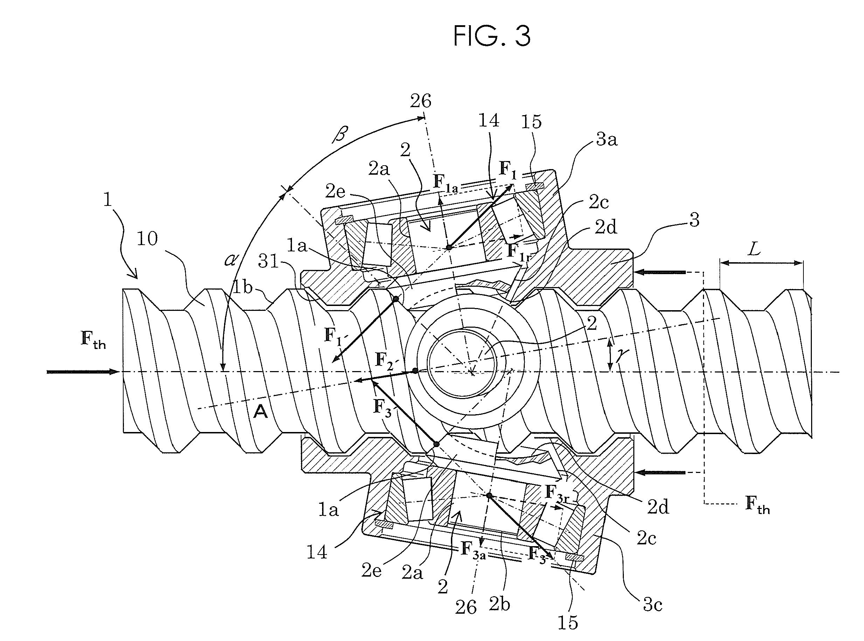

Fig. 3 is a side sectional view of the linear actuator which is the second embodiment of the present invention. The same elements in the foregoing figures are each assigned the same reference number or symbol, and description of these elements is omitted. The same also applies to the figures that follow.

The rollers 2 shown in Fig. 3 are each turnably supported only via one tapered roller bearing 14, in the roller cage 3. The tapered roller bearing 14, unlike the cylindrical roller bearing 4 constituted by cylindrical rollers, is constituted by a plurality of conically shaped rollers, thus being able to support the thrust direction components (thrust loads $F_{1a}$, $F_{2a}$, $F_{3a}$) of contact repulsions $F_1$, $F_2$, $F_3$, as well as the radial components (radial loads $F_{1r}$, $F_{2r}$, $F_{3r}$) thereof. In addition, the tapered roller bearing 14 is fixed to the inside of the roller cage 3 via retaining rings 15 such that an imaginary line intersecting perpendicularly with the flank surface 1a at a contact section of the roller 2 and the flank surface 1a passes through a space surrounded by the tapered rollers. That is, since lines of action of the contact repulsions $F_1$, $F_2$, $F_3$ in the present embodiment pass through the space surrounded by the tapered rollers, the roller 2 can be supported using one tapered roller bearing 14 only.

Using a rolling bearing capable of supporting both radial loads and thrust loads as the bearing for supporting the roller 2, as described above, enables a total number of bearings needed in the entire linear actuator to be further reduced relative to the number required in the first embodiment, and the reduction further reduces manufacturing costs of the linear actuator.

In the present invention, intersections between the central axis 26 of the roller 2 and the lines of action of each contact repulsion $F_1$, $F_3$ are arranged near the positions shown in a catalogue and others, as points of action of loads in the tapered roller bearing 14. This enables the radial load components $F_{1r}$, $F_{3r}$ and thrust load components $F_{1a}$, $F_{3a}$ of the forces $F_1$, $F_3$ to be reasonably supported with one tapered roller bearing 14 alone. In addition, while in the present embodiment the tapered roller bearing 14 has been described and shown as an example of a rolling bearing capable of sustaining both radial loads and thrust loads, this bearing may be replaced by any other bearing such as a deep-groove ball bearing or angular ball bearing.

Furthermore, a distal end of the thread 10 is accommodated in the recess provided on the inner end face 2d in the roller 2 of the present embodiment. Accommodating the thread 10 in the roller 2 in this form reduces dimensions of the roller cage 3.

Next, a third embodiment of the present invention is described below. The present embodiment relates to dimensions of the rolling portion 2e of the roller 2 and the flank surface 1a of the thread 10, and these sections are dimensionally optimized for suppressed slipping between the roller 2 and the thread 10.

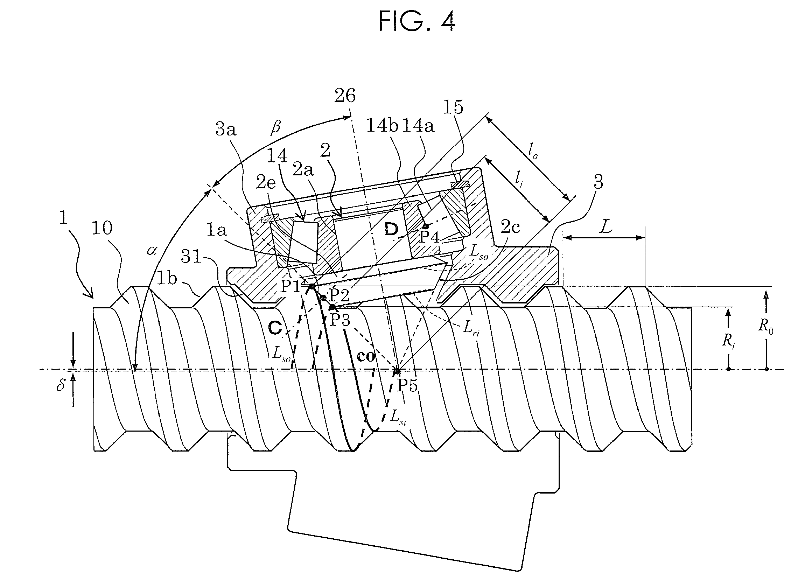

Fig. 4 is a side sectional view of a linear actuator which is the third embodiment of the present invention. The linear actuator shown in Fig. 4 is equivalent to a partly omitted type of the linear actuator shown in Fig. 3.

As shown in Fig. 4, a point belonging to a contact section of the right flank surface 1a and the rolling surface 2c and positioned at an outermost peripheral side in a radial direction of the screw shaft 1 is defined as outer peripheral contact point P1, a point belonging to the contact section and positioned at an innermost peripheral side in the radial direction of the screw shaft 1 is defined as inner peripheral contact point P3, a point belonging to the contact section and positioned midway between outer peripheral contact point P1 and inner peripheral contact point P3 is defined as middle contact point P2, a point belonging to the contact section and positioned midway on a contact section between the tapered roller 14a and inner ring 14b of the tapered roller bearing 14 is defined as middle contact point P4, and an apex of the cone "co", defined by the central axis 26 and a line passing through points P1 and P3, is defined as cone apex P5 (i.e., P5 is an intersection between the central axis 26 and the line passing through points P1 and P3). These points are each marked with a black circle.

Furthermore, a spiral of one-lead length, which passes through point P1 with the central axis of the screw shaft 1 as a center, is defined as spiral Lso, a spiral of one-lead length, which passes through point P3 with the central axis of the screw shaft 1 as a center, is defined as spiral Lsi, a circle on the rolling surface 2c, which passes through point P1 with the central axis 26 as a center, is defined as circle Lso, and a circle on the rolling surface 2c, which passes through point P3 with the central axis 26 as a center, is defined as circle Lri. These spirals and circles are each shown as a dashed line.

Furthermore, a radial distance from the central axis of the screw shaft 1 to point P1 is defined as Ro, a radial distance from the central axis of the screw shaft 1 to point P3, as Ri, a radial distance from cone apex P5 to point P1, as Io, a radial distance from cone apex P5 to point P3, as Ii, and a deviation of cone apex P5 from the central axis of the screw shaft 1, as δ. These definitions assume that when δ takes a positive value, cone apex P5 is below the central axis of the screw shaft 1 (i.e. P5 underlies the central axis), and that when δ takes a negative value, cone apex P5 is above the central axis (and P5 stays above the central axis). In the linear actuator of Fig. 4, apex P5 of the cone formed by the rolling portion 2e of the roller 2 is below the central axis of the screw shaft 1 and the value of δ is positive. In Fig. 4, planes C and D, each including points P2 and P4 and orthogonal to the paper, are further shown as single-dashed lines.

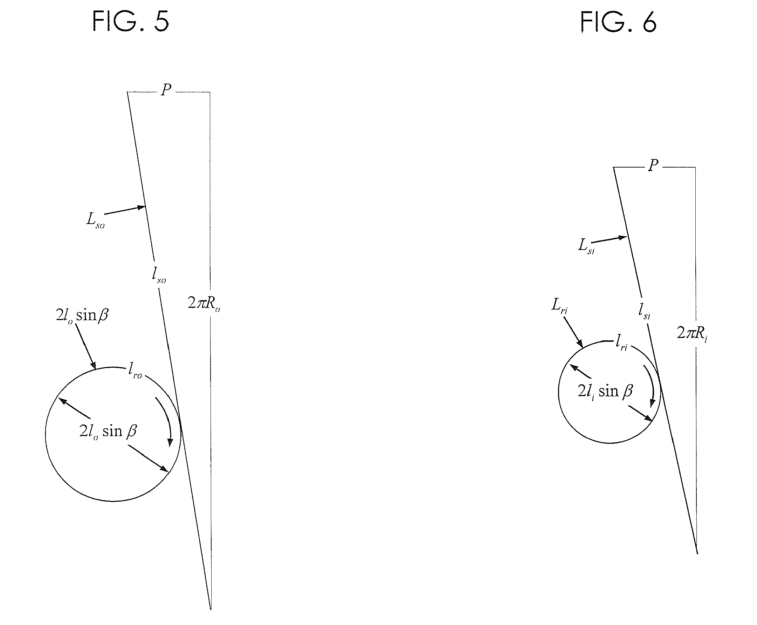

Fig. 5 is a diagram that shows rolling distances of various sections at point P1 in Fig. 4. Fig. 6 is a diagram that shows rolling distances of various sections at point P3 in Fig. 4. Fig. 5 schematically represents the way the circle Lso rolls over a plane upon which the spiral Lso in Fig. 4 was developed. Likewise, Fig. 6 schematically represents the way the circle Lri rolls over a plane upon which the spiral Lsi in Fig. 4 was developed.

Referring to Figs. 5 and 6, when length of the spiral Lso is expressed as lso, that of the spiral Lsi as lsi, that of the circle Lso as lso, and that of the circle Lri as lri, expression (1) must hold for rolling movements at points P1 and P3 to simultaneously become those substantially free from slipping.

[Numerical expression 1]

$$l_{so} : l_{si} = l_{ro} : l_{ri} \ \ \dots (1)$$

where a right side is rewritten as expression (2), which is then further rewritten as expression (3).

[Numerical expression 2]

$$l_{ro} : l_{ri} = 2\pi l_o \sin \beta : 2\pi l_i \sin \beta = l_o : l_i \ \ \dots (2)$$

[Numerical expression 3]

$$l_o : l_i = l_o \sin \alpha : l_i \sin \alpha = (R_o + \delta) : (R_i + \delta) \ \ \dots (3)$$

That is, it can be derived from expressions (1) and (3) that expression (4) needs to be established as a conditional expression for the rolling movements at points P1 and P3 to become simultaneously substantially slipping-free movements.

[Numerical expression 4]

$$l_{so} : l_{si} \fallingdotseq (R_o + \delta) : (R_i + \delta) \quad \ldots (4)$$

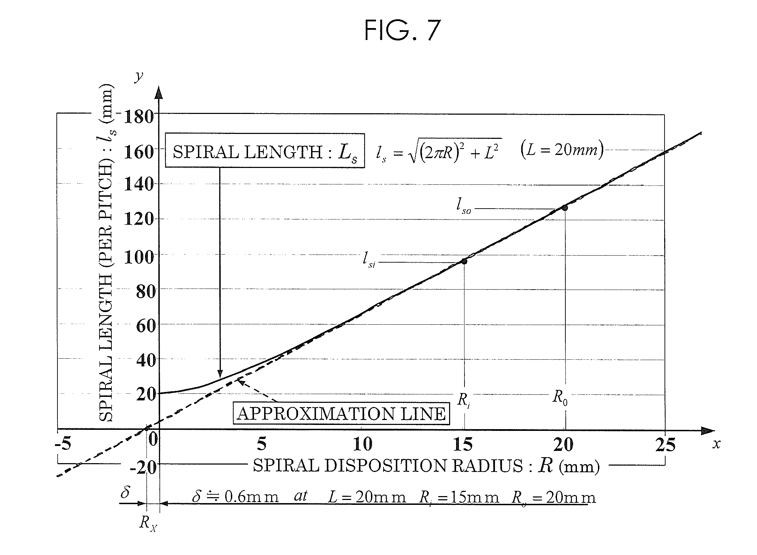

Fig. 7 is an explanatory diagram of a design theory for minimizing friction loss in the present embodiment.
This figure is used to illustrate a process for calculating the value of $\delta$ that satisfies expression (4). Horizontal axis "x" of the graph shown in Fig. 7 denotes spiral disposition radius R (i.e., a distance from a spiral to the central axis of the screw shaft 1), and vertical axis "y" denotes one lead (one pitch) of spiral length "ls" of the screw shaft having arbitrary spiral disposition radius R and lead L. Here, "ls" can be calculated by assigning the arbitrary spiral disposition radius R and the lead L of the screw shaft 1 to expression (5).
[Numerical expression 5]

$$l_s = \sqrt{(2\pi R)^2 + L^2} \quad \ldots (5)$$

Fig. 7 graphically represents "ls" as a function of R with the lead L fixed at 20 mm. In this case, even if R=0, "ls" has the value of the lead L (i.e., if R=0, then ls=20>0) and is expressed as a curve whose curvature increases with decreases in the value of R and decreases with increases in the value of R. In an interval with a sufficiently large value of R, however, "ls" can be approximated with a straight line, as shown in Fig. 7. In Fig. 7. "ls" is approximated into straight-line form based upon an interval from Ri=15 mm to R0=20 mm, and the straight line (approximation line) is shown as a dashed line. If an intercept formed by the approximation line and the horizontal axis is taken as "Rx" in the graph of Fig. 7, the approximation line can be written as shown in expression (6), and if -Rx=$\delta$ is additionally defined in expression (6), "ls" can be rewritten as shown in expression (7).
[Numerical expression 6]

$$l_s = const \times (R - R_x) \quad \ldots (6)$$

[Numerical expression 7]

$$l_s = const \times (R + \delta) \quad \ldots (7)$$

It is evident here that if the relationship shown in expression (7) is present in the interval including "Ri" and "Ro", then expression (4) holds. In Fig. 7, "Rx" has a negative value of approximately -0.6 mm, so $\delta$ takes a positive value. In addition, since it is obvious from expression (5) that if R=0, "ls" (= lead L) takes a positive value, "Rx" is considered to take a negative value in any situation, not only in the case of Fig. 7, and $\delta$ nearly always has a positive value. That is, it can be seen that where expression (1) holds, cone apex P5 of the cone "co" formed by the rolling portion 2e nearly always takes a position beyond the central axis of the screw shaft 1 (i.e., cone apex P5 is positioned on an opposite side of the roller 2 relative to the central axis of the screw shaft 1). To rephrase this the other way around, cone apex P5 must be positioned on the opposite side of the roller 2 relative to the central axis of the screw shaft 1 to prevent substantially no slipping at any point of contact between the rolling surface 2c and the right flank surface 1a. Accordingly, if as in the linear actuator of the present embodiment that is shown in Fig. 4, the roller 2 is disposed for the right flank surface 1a and the rolling portion 2e to come into contact with each other and for cone apex P5 to be positioned on the opposite side of the roller 2 relative to the central axis of the screw shaft 1, the roller 2 can be made to roll with substantially no slipping. Constructing the linear actuator as described above, therefore, further improves motive power transmission efficiency.

The contact state between the roller 2 and thread 10 in the present embodiment, and the contact state between the tapered roller 14a and inner ring 14b in the bearing 14 are described below.

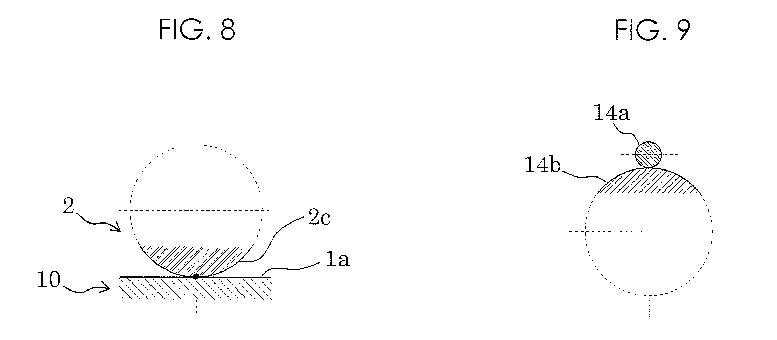

Fig. 8 is a sectional view that shows vicinity of the rolling portion 2e of the roller 2 on plane C in Fig. 4. Fig. 9 is a sectional view that shows vicinity of the tapered roller 14a of the bearing 14 on plane C in Fig. 4.

The right flank surface 1a shown in the form of a nearly straight line in Fig. 8 has no curvature, even in a direction perpendicular to the paper, and can thus be considered as a planar Hertzian contact model. On the other hand, the rolling surface 2c of the roller 2, which is paired with the right flank surface 1a can be approximated with a cylindrical surface having a large radius, as described above. Strictly speaking, the right flank surface 1a and the rolling surface 2c are in line contact. However, since one of the two surfaces (namely, the right flank surface 1a) is a plane and the other (the rolling surface 2c) has a small curvature, the contact state of both is close to a surface contact state, so it can be easily estimated that Hertzian stressing is suppressed.

Referring to Fig. 9, the smaller of two circles is the tapered roller 14a and the larger is the inner ring 14b. Contact between the tapered roller 14a and the inner ring 14b can be approximated to contact between cylinders. More strictly, however, this state is contact between bulges, and one of the two cylinders (namely, the tapered roller 14a) has a larger curvature, such that an increase in Hertzian stress is avoided by distributing the load with the plurality of tapered rollers 14a in the bearing. In other words, the load that the tapered roller bearing 14 sustains via the plurality of tapered rollers 14a can be described as being transmitted at one contact section by the right flank surface 1a and rolling surface 2c shown in Fig. 8.

Next, a fourth embodiment of the present invention is described below. The present embodiment is **characterized in that** it includes one more set of rollers than in each of the above embodiments. More specifically, the present embodiment includes not only a plurality of rollers 2 (first rollers) that come into contact with the right flank surfaces 1a of each thread 10, but also a plurality of rollers (second rollers) that come into contact with the left flank surfaces 1b of each thread 10.

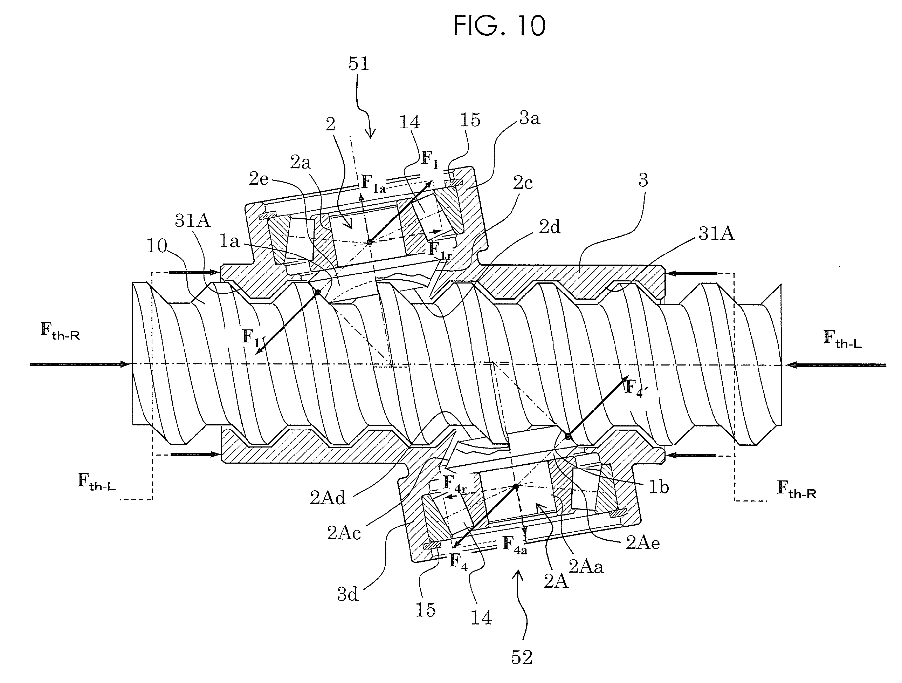

Fig. 10 is a side sectional view of a linear actuator which is the fourth embodiment of the present invention. Vicinity of female-threaded portions 31A (described later herein) of the roller cage 3 in this figure is conveniently shown as a section in a plane including the central axis of the screw shaft 1.

The linear actuator shown in the figure includes: the first roller group 51 formed with the plurality of rollers 2 spaced from one another in the circumferential direction of the screw shaft 1, along the right flank surface 1a of the thread 10, the rollers 2 each being formed to roll over the right flank surface 1a via the rolling surface 2c; the second roller group 52 formed with the plurality of rollers 2A spaced from one another in the circumferential direction of the screw shaft 1, along the left flank surface 1b of the thread 10, each roller 2A being formed to roll over the left flank surface 1b via a rolling surface 2Ac; and the female-threaded portions 31A each formed facing the thread 10 of the screw shaft 1, inside an inner circumferential region of the roller cage 3.

Each roller 2 in the first roller group 51, constructed similarly to the rollers 2 of each embodiment described above, is accommodated in the protrusions 3a, 3b (not shown), 3c (not shown) of the roller cage 3, and rolls in contact with the right flank surface 1a of the thread 10. The roller 2 in the first roller group 51 also transmits to the roller cage 3 a part of an axial thrust $F_{th-R}$ acting in a rightward direction from the left end face of the screw shaft 1 and balancing with a force shown at the right end face of the roller cage 3. For convenience' sake, of the three protrusions, only the protrusion 3a containing the roller 2 is shown in Fig. 10. However, the other protrusions, 3b and 3c, are each disposed similarly to those of the above embodiments, at 120-degree angle intervals with respect to the protrusion 3a, in the circumferential direction of the screw shaft 1, and at intervals of 1/3 of the lead L, in the axial direction of the screw shaft 1.

Each roller 2A in the second roller group 52 is accommodated in protrusions 3d, 3e (not shown), 3f (not shown) of the roller cage 3, and rolls in contact with the left flank surface 1b of the thread 10. The protrusion 3e, which is omitted as with the protrusions 3b and 3c, is disposed at a position shifted from that of the protrusion 3d through 1/3 of the lead L of the screw shaft 1 in a leftward direction in Fig. 10 and rotated from the position of the protrusion 3d through 120 degrees about the central axis of the screw shaft 1. The protrusion 3f is disposed at a position shifted from that of the protrusion 3e through 1/3 of the lead L in the leftward direction of Fig. 10 and rotated from the position of the protrusion 3e through 120 degrees about the central axis of the screw shaft 1. That is, the protrusion 3d corresponds to the protrusion 3a, the protrusion 3e corresponds to the protrusion 3b, and the protrusion 3f corresponds to the protrusion 3c. The roller accommodated in the protrusions having this correspondence relationship is constructed point-symmetrically via a point on the central axis of the screw shaft 1. Each roller 2A of the second roller group 52 transmits to the roller cage 3 a part of an axial thrust $F_{th-L}$ acting in a leftward direction from the right end face of the screw shaft 1 and balancing with a force shown at the left end face of the roller cage 3.

The female-threaded portions 31A are formed such that with each roller 2 of the first roller group 51 kept in contact with the right flank surface 1a and with each roller 2A of the second roller group 52 kept in contact with the left flank surface 1b, large clearances are formed between the right flank surface 1a and a corresponding female-threaded portion 31A and between the left flank surface 1b and a female-threaded portion 31A corresponding thereto.

In the linear actuator of the present embodiment having the construction described above, even in a case that axial thrust acts in any of the leftward and rightward axial directions of the screw shaft 1, the axial thrust is transmitted to the roller cage 3 via any one of the first roller group 51 and second roller group 52. Briefly, according to the present embodiment, since the roller groups 51, 52 and the thread 10 can nearly always be brought into contact with each other as rolling pairs, friction loss can nearly always be minimized, irrespective of the direction in which the axial thrust acts. According to the present embodiment, even in a case that the direction of action of the axial thrust is fixed and momentum and/or a transverse load acts, friction loss can also be minimized since all sections having the rollers 51, 52 and the thread 10 in contact are rolling pairs.

While the rollers 2, 2A in the present embodiment are supported via tapered roller bearings 14, these rollers may, of course, be supported via elements such as the above-described cylindrical roller bearings.

Next, a fourth embodiment of the present embodiment is described below.

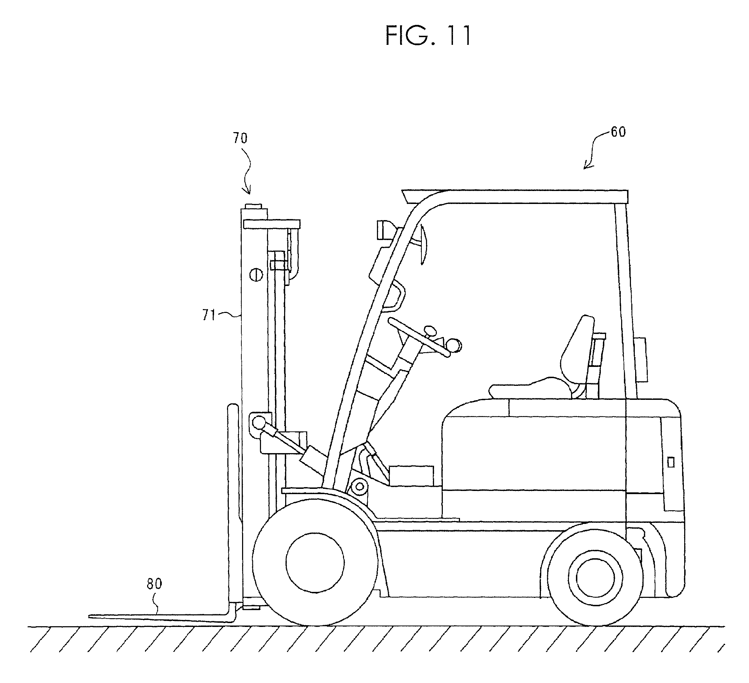

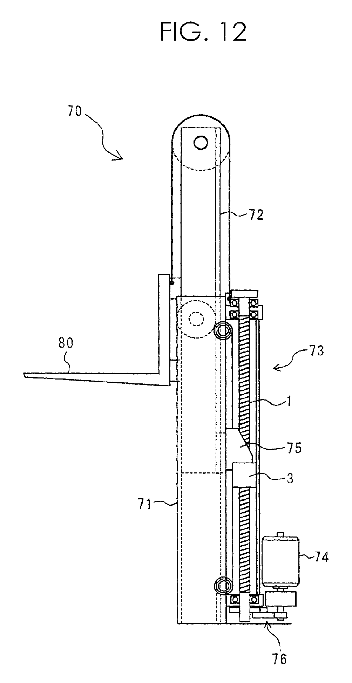

Fig. 11 is a side view of a forklift truck equipped with a linear actuator according to the present invention, and Fig. 12 is an enlarged view that shows a mast 70 and its vicinity, of the forklift truck shown in Fig. 11.

Referring to Fig. 11, the forklift truck shown in Figs. 11 and 12 includes a truck body 60 equipped with a track device and a steering device, a mast 70 provided in front of the truck body 60, and forks 80 installed on an inner frame 72 (see Fig. 12) of the mast 70.

The mast 70 in Fig. 12 includes an outer frame 71 installed in front of the truck body 60, the inner frame 72 provided internally to the outer frame 71 and constructed to move upward and downward along the outer frame 71, and a linear actuator 73 that moves the inner frame 72 upward and downward. The linear actuator 73 includes a screw shaft 1 fixed to the outer frame 71, a roller cage 3, and a motor (driving source) 74 that rotationally drives the screw shaft 1. The roller cage 3 supports the inner frame 72 from below via a bracket 75 mounted on the inner frame 72. The motor 74 in the present embodiment transmits driving force to the screw shaft 1 via a plurality of gears 76.

In the forklift truck of the above-described configuration, when the motor 74 is driven using the steering device, the screw shaft 1 is rotationally driven to move the roller cage 3 along the screw shaft 1. Thus, the inner frame 72 supported by the roller cage 3 is lifted upward or downward, thus moving the forks 80 upward or downward. The linear actuator in each embodiment described above can be used in this way as a height control device for the forks 80 of the forklift truck. That is, according to the present embodiment, an electrically driven actuator can be used as an actuator for the forklift trucks in which a hydraulic actuator has been mainly used before.

Description of Reference Numbers and Symbols

1 ... Screw shaft, 1a ... Right flank surface, 1b ... Left flank surface, 2 ... Roller, 2a ... Rotating shaft, 2b ... Outer end face, 2c ... Rolling surface, 2d ... Inner end face, 2e ... Rolling portion, 3 ... Roller cage, 3a ... Protrusion, 3b ... Protrusion, 3c ... Protrusion, 3d ... Protrusion, 3e ... Protrusion, 3f ... Protrusion, 4 ... Radial rolling bearing (Cylindrical roller bearing), 5 ... Thrust rolling bearing (Cylindrical roller bearing), 6 ... Cover, 10 ... Screw thread, 14 ... Tapered roller bearing, 14a ... Tapered roller, 14b ... Inner ring, 15 ... Retaining ring, 26 ... Central axis of roller 2, 31 ... Female-threaded portion, 51 ... First roller group, 52 ... Second roller group, 60 ... Truck body, 70 ... Mast, 71 ... Outer frame, 72 ... Inner frame, 73 ... Linear actuator, 74 ... Motor, 80 ... Fork

**Claims**

1. A linear actuator comprising:

   a screw shaft;
   a screw thread spirally formed on an outer periphery of the screw shaft;
   a plurality of rollers arranged along the screw thread so as to be spaced from one another in a circumferential direction of the screw shaft, the rollers being formed to roll along a flank surface of the screw thread via respective rolling surfaces; and
   a roller cage accommodating the plurality of rollers so as to rotate each thereof on respective axes, the roller cage being constructed such that when the rollers are made to roll, the cage moves about the screw shaft in relative form with respect thereto;
   wherein each roller has a central axis fixedly positioned with respect to the roller cage such that the roller takes a posture making a line imaginarily extended from the central axis intersect the screw shaft, and such that the central axis is inclined towards the flank surface with which the corresponding rolling surface comes into contact.

2. The linear actuator according to claim 1, wherein:

   the rolling surface of the roller is in contact with the flank surface in a definite range in a direction of the central axis of the roller.

3. The linear actuator according to claim 1, wherein:

the central axis of the roller is positioned on a plane intersecting a central axis of the screw shaft at an angle substantially equal to a lead angle of the screw thread, and is inclined to a contact section between the rolling surface and the flank surface, in the plane.

4. The linear actuator according to claim 1, wherein:

a diameter of the roller at a section thereof, the section being closest to the screw shaft, is greater than a pitch of the thread; and
the roller includes an end face formed near the screw shaft, the end face being opposed to an adjacent thread spaced by one pitch from the thread with which the rolling surface is in contact.

5. The linear actuator according to claim 4, wherein:

the end face of the roller that is formed near the screw shaft includes a recess to avoid contact of the end face with the adjacent thread spaced by one pitch from the thread with which the rolling surface is in contact.

6. The linear actuator according to claim 1, wherein:

the flank surface of the thread is inclined with respect to the central axis of the screw shaft;
in order to bring the rolling surface into line contact with the flank surface, the roller is formed such that in a definite range in the direction of the central axis of the roller, as a diametral section of the roller approaches the screw shaft, the diametral section is progressively reduced in size to suit a particular shape of the flank surface.

7. The linear actuator according to claim 6, wherein:

as the diametral section of the roller approaches the screw shaft in a definite range in the direction of the central axis of the roller, the diametral section is reduced in size at a fixed rate in line with the shape of the thread including the inclined flank surface; and
the rolling surface of the roller is formed by part of a side of a cone.

8. The linear actuator according to claim 1, wherein the roller is formed such that:

when a point belonging to a contact section of the roller and the flank surface and positioned at an outermost peripheral side in a radial direction of the screw shaft is defined as an outer peripheral point of contact,
when a point belonging to the contact section of the roller and the flank surface and positioned at an innermost peripheral side in the radial direction of the screw shaft is defined as an inner peripheral point of contact, and
when a cone is defined by a line passing through the outer peripheral point of contact and the inner peripheral point of contact, as well as by the central axis of the roller,
the roller has an apex overstepping a central axis of the screw shaft.

9. The linear actuator according to claim 1, wherein:

the flank surface of the thread is inclined with respect to a central axis of the screw shaft;
the roller cage supports the roller via a rolling bearing sustaining a radial load exerted upon the roller;
the rolling bearing is formed by a plurality of rolling bodies each disposed in a circumferential direction of a rotating shaft of the roller; and
the rolling bearing is fixed to an internal portion of the roller cage such that an imaginary line intersecting the flank surface perpendicularly at a contact section between the rolling surface and the flank surface passes through a space surrounded by the plurality of rolling bodies.

10. The linear actuator according to claim 9, wherein:

the rolling bearing is a single rolling bearing sustaining both of a radial load upon the roller and a thrust load thereupon; and

the roller cage supports the roller via the single rolling bearing.

11. The linear actuator according to claim 9, wherein:

the rolling bearing is a single rolling radial bearing sustaining a radial load exerted upon the roller; and
the roller cage supports the roller via the rolling radial bearing and a single rolling thrust bearing sustaining a thrust load exerted upon the roller.

12. The linear actuator according to claim 1, wherein:

the number of rollers used is three; and
the three rollers are arranged at equal intervals along the thread such that respective positions of the rollers in an axial direction of the screw shaft are shifted through 1/3 of a lead of the screw shaft from one another, and such that respective positions of the rollers in the circumferential direction of the screw shaft are shifted through $2\pi/3$ from one another.

13. A linear actuator comprising:

a screw shaft;
a screw thread spirally formed on an outer periphery of the screw shaft;
a first roller group formed by a plurality of rollers arranged along right flank surface of the thread so as to be spaced from one another in a circumferential direction of the screw shaft, the rollers each being formed to roll along each right flank surface via a first rolling surface;
a second roller group formed by a plurality of rollers arranged along left flank surface of the thread so as to be spaced from one another in the circumferential direction of the screw shaft, the rollers each being formed to roll along each left flank surface via a second rolling surface; and
a roller cage accommodating the rollers of the first roller group and of the second roller group so as to rotate each of the rollers on respective axes, the roller cage being constructed such that when the rollers are made to roll, the cage moves about the screw shaft in relative form with respect thereto;
wherein each roller in the first and second roller groups has a central axis fixedly positioned with respect to the roller cage such that the roller takes a posture making a line imaginarily extended from the central axis intersect the screw shaft, and such that the central axis is inclined towards the left flank surface or right flank surface with which the rolling surface comes into contact.

14. The linear actuator according to claim 13, wherein:

the rolling surfaces of each roller in the first and second roller groups are each in contact with the right flank surface or the left flank surface, respectively, in a definite range in a direction of the central axis of the roller.

15. A forklift truck equipped with the linear actuator of any one of claims 1 to 14 as means for height control of forks.

# FIG. 1

EP 2 390 532 A1

FIG. 2

# FIG. 3

EP 2 390 532 A1

FIG. 4

FIG. 5

FIG. 6

## FIG. 7

SPIRAL LENGTH (PER PITCH) : $l_s$ (mm)

SPIRAL LENGTH : $L_s$ $\quad l_s = \sqrt{(2\pi R)^2 + L^2}$ $\quad (L = 20mm)$

$l_{so}$

$l_{si}$

APPROXIMATION LINE

$R_i$ $\qquad R_0$

SPIRAL DISPOSITION RADIUS : $R$ (mm)

$\delta$

$R_x$

$\delta \fallingdotseq 0.6\mathrm{mm} \quad at \quad L = 20\mathrm{mm} \quad R_i = 15\mathrm{mm} \quad R_o = 20\mathrm{mm}$

EP 2 390 532 A1

EP 2 390 532 A1

FIG. 8

FIG. 9

FIG. 10

EP 2 390 532 A1

FIG.11

FIG. 12

## INTERNATIONAL SEARCH REPORT

| | International application No. |
|---|---|
| | PCT/JP2009/071682 |

### A. CLASSIFICATION OF SUBJECT MATTER
*F16H25/22*(2006.01)i, *B66F9/08*(2006.01)i

According to International Patent Classification (IPC) or to both national classification and IPC

### B. FIELDS SEARCHED

Minimum documentation searched (classification system followed by classification symbols)
F16H25/20-25/24, B66F9/08

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2007/066965 A1 (WINNER BEARINGS CO., LTD.),<br>14 June 2007 (14.06.2007),<br>paragraphs [0001], [0020], [0021]; claims;<br>fig. 6, 7<br>& KR 10-2007-59976 A | 1,2,13,14<br>6-8,15<br>3-5,9-11 |
| Y | JP 60-136661 A (Kazuo FUJITA),<br>20 July 1985 (20.07.1985),<br>claims; fig. 12<br>(Family: none) | 6-8 |
| Y | JP 2001-106493 A (Murata Machinery Ltd.),<br>17 April 2001 (17.04.2001),<br>claims; fig. 1 to 3<br>(Family: none) | 15 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 March, 2010 (12.03.10) | Date of mailing of the international search report<br>23 March, 2010 (23.03.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2009/071682

| C (Continuation). DOCUMENTS CONSIDERED TO BE RELEVANT | | |
|---|---|---|
| Category* | Citation of document, with indication, where appropriate, of the relevant passages | Relevant to claim No. |
| A | Microfilm of the specification and drawings annexed to the request of Japanese Utility Model Application No. 126044/1984(Laid-open No. 40770/1986) (Sony Corp.), 14 March 1986 (14.03.1986), fig. 3 (Family: none) | 10,11 |

Form PCT/ISA/210 (continuation of second sheet) (July 2009)

## INTERNATIONAL SEARCH REPORT

International application No.

PCT/JP2009/071682

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
   The invention in claim 1 does not have a special technical feature, since the invention is described in WO 2007/066965 A1.
   Therefore, since there is no technical relationship involving one or more same or corresponding special technical feature among the inventions in claims 1, 2, 13 – 15, the invention in claim 3, the inventions in claims 4, 5, the inventions in claims 6, 7, the invention in claim 8, the inventions in claims 9 – 11, and the invention in claim 12, those inventions cannot be considered to be so linked as to form a single general inventive concept.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☒ As only some of the required additional search fees were timely paid by the applicant, this international search report covers only those claims for which fees were paid, specifically claims Nos.:
   1 – 11, 13 – 15

4. ☐ No required additional search fees were timely paid by the applicant.   Consequently, this international search report is restricted to the invention first mentioned in the claims; it is covered by claims Nos.:

**Remark on Protest**          ☐ The additional search fees were accompanied by the applicant's protest and, where applicable, the payment of a protest fee.

                              ☐ The additional search fees were accompanied by the applicant's protest but the applicable protest fee was not paid within the time limit specified in the invitation.

                              ☒ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2004190767 A